# EUROPEAN PATENT APPLICATION

(11) **EP 4 395 407 A1**
(43) Date of publication of application: **03.07.2024**
(21) Application number: 22860304.9
(22) Date of filing: 16.08.2022
(51) Int. Cl.: H04W 24/10

(54) **METHOD FOR OBTAINING CSI REPORT, AND COMMUNICATION APPARATUS**

(30) Priority: 25.08.2021 CN 202110984682
(71) Applicant: Beijing Unisoc Communications Technology Co., Ltd, Beijing 100083 (CN)
(72) Inventor: WANG, Hualei, Beijing 100083 (CN)
(74) Representative: Mewburn Ellis LLP
(86) International application number: PCT/CN2022/112631
(87) International publication number: WO 2023/024958

(57) **Abstract**

The present disclosure provides a method for obtaining a channel state information (CSI) report and a communication apparatus. The method includes receiving network information and obtaining a CSI report based on the network information. The CSI report includes CSI measurement results in a coherent joint transmission hypothesis for one or more stations. With the method proposed in this disclosure, a terminal can obtain the CSI report in the coherent joint transmission hypothesis for one or more stations.

## Description

### TECHNICAL FIELD

The present disclosure relates to the field of communication and, in particular, to a method for obtaining a Channel State Information (CSI) report and a communication apparatus.

### BACKGROUND

Currently, in New Radio (NR) R15/R16 systems, a Channel State Information (CSI) report consists of two parts, where the first part has a fixed payload size and can be used to determine the number of information bits in the second part. However, one CSI report only contains CSI measurement results in a single-station transmission hypothesis for one station. Therefore, how to obtain a CSI report in a one-or-multi station coherent joint transmission hypothesis is an urgent problem to be solved.

### SUMMARY

The present disclosure provides a method for obtaining a Channel State Information (CSI) report and a communication apparatus, where a terminal device is capable of obtaining a CSI report in a coherent joint transmission hypothesis for one or multiple stations.

In a first aspect, the present disclosure provides a method for obtaining a CSI report. The method includes receiving network information and obtaining a CSI report based on the network information. The CSI report includes CSI measurement results in a coherent joint transmission hypothesis for one or more stations.

Based on the method described in the first aspect, the network information is received and the CSI report is obtained based on the network information, where the CSI report includes CSI measurement results in the coherent joint transmission hypothesis for one or more stations. As a result, with this method, the terminal device can obtain the CSI report in the coherent joint transmission hypothesis for one or more stations.

In a possible implementation, the network information includes codebook-type indication information, where the codebook-type indication information indicates a codebook type in the CSI report.

In a possible implementation, the codebook type includes a first codebook type and a second codebook type, where the first codebook type indicates obtaining a frequency-domain codebook for each of multiple stations, and the second codebook type indicates jointly obtaining a frequency-domain codebook for the stations.

In a possible implementation, the network information includes a first parameter, where the first parameter is used for determining a codebook type.

In a possible implementation, the first parameter includes a quantity threshold of stations.

In a possible implementation, the codebook type includes a first codebook type and a second codebook type, where the first codebook type indicates obtaining a frequency-domain codebook for each of the multiple stations, and the second codebook type indicates jointly obtaining a frequency-domain codebook for the stations. The method further includes determining that the codebook type in the CSI report is the first codebook type in response to the quantity of stations contained in the CSI report being greater than the quantity threshold.

In a possible implementation, the method further includes determining that the codebook type in the CSI report is the second codebook type in response to the quantity of stations contained in the CSI report being less than or equal to the quantity threshold.

In a possible implementation, the CSI report includes first information and second information.

In a possible implementation, the first information includes at least one of: quantity information of stations, information of the number of non-zero wideband amplitude coefficients, or reference resource index indication information.

In a possible implementation, the second information includes all or part of CSI measurement results for the stations.

In a possible implementation, the reference resource index indication information is obtained through a bitmap.

In a possible implementation, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

In a possible implementation, the second information includes *i* groups of information, where *i* is the quantity of stations contained in the CSI report.

In a possible implementation, a CSI measurement result(s) for one station corresponds to one group of information.

In a possible implementation, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

In a possible implementation, the second information includes *i* groups of information, wherein *i* = *j*+1 *and j* is the quantity of stations contained in the CSI report.

In a possible implementation, a first group in the *i* groups of information includes spatial-domain codebook information for each station.

In a possible implementation, for groups other than the first group in the *i* groups of information, part or all of CSI measurement results for one station corresponds to one group of information.

In a possible implementation, the part or all of CSI measurement results for the station includes at least one of: reference amplitude information of a non-zero coefficient for the station, frequency-domain codebook information for the station, or non-zero coefficient information for the station.

In a possible implementation, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

In a possible implementation, the second information includes *i* groups of information, where *i* = *j*+2 and *j* is the quantity of stations contained in the CSI report.

In a possible implementation, a first group in the *i* groups of information includes spatial-domain codebook information for each station.

In a possible implementation, a second group in the *i* groups of information includes at least one of: frequency-domain codebook information for each station, or reference amplitude information for each station.

In a possible implementation, the frequency-domain codebook information for each station is the same.

In a possible implementation, for groups other than the first group and the second group in the *i* groups of information, part or all of CSI measurement results for one station corresponds to one group of information.

In a possible implementation, the part or all of CSI measurement results for the station includes at least one of: reference amplitude information of a non-zero coefficient for the station, or non-zero coefficient information for the station.

In a possible implementation, the *i* groups of information are arranged according to priorities.

In a possible implementation, the CSI report further includes codebook-type information, where the codebook-type information indicates a codebook type in the CSI report.

In a second aspect, the present disclosure provides a method for obtaining a CSI report. The method includes obtaining a CSI report, where the CSI report includes CSI measurement results in a coherent joint transmission hypothesis for one or multiple stations. The method further includes determining a channel state based on the CSI report.

Based on the method described in the second aspect, the CSI report is obtained, and then the channel state is determined based on the CSI report, where the CSI report includes CSI measurement results in a coherent joint transmission hypothesis for one or more stations. As a result, with this method, the channel state can be determined through the CSI report in the coherent joint transmission hypothesis for one or more stations.

In a possible implementation, the CSI report includes first information and second information.

In a possible implementation, the first information includes at least one of: quantity information of stations, information of the number of non-zero wideband amplitude coefficients, or reference resource index indication information.

In a possible implementation, the second information includes all or part of CSI measurement results for the stations.

In a possible implementation, the reference resource index indication information is obtained through a bitmap.

In a possible implementation, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

In a possible implementation, the second information includes *i* groups of information, where *i* is the quantity of stations contained in the CSI report.

In a possible implementation, a CSI measurement result for one station corresponds to one group of information.

In a possible implementation, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

In a possible implementation, the second information includes *i* groups of information, wherein *i* = *j*+1 and *j* is the quantity of stations contained in the CSI report.

In a possible implementation, a first group in the *i* groups of information includes spatial-domain codebook information for each station.

In a possible implementation, for groups other than the first group in the *i* groups of information, part or all of CSI measurement results for one station corresponds to one group of information.

In a possible implementation, the part or all of CSI measurement results for the station includes at least one of: reference amplitude information of a non-zero coefficient for the station, frequency-domain codebook information for the station, or non-zero coefficient information for the station.

In a possible implementation, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

In a possible implementation, the second information includes *i* groups of information, where *i* = *j*+2 and *j* is the quantity of stations contained in the CSI report.

In a possible implementation, a first group in the *i* groups of information includes spatial-domain codebook information for each station.

In a possible implementation, a second group in the *i* groups of information includes at least one of: frequency-domain codebook information for each station, or reference amplitude information for each station.

In a possible implementation, the frequency-domain codebook information for each station is the same.

In a possible implementation, for groups other than the first group and the second group in the *i* groups of information, part or all of CSI measurement results for one station corresponds to one group of information.

In a possible implementation, the part or all of CSI measurement results for the station includes at least one of: reference amplitude information of a non-zero coefficient for the station, or non-zero coefficient information for the station.

In a possible implementation, the *i* groups of information are arranged according to priorities.

In a possible implementation, the CSI report further includes codebook-type information, where the codebook-type information indicates a codebook type in the CSI report.

In a third aspect, the present disclosure provides a communication apparatus. The communication apparatus includes units for achieving the method of any of the first or second aspect or implementations thereof.

In a fourth aspect, the present disclosure provides a communication apparatus. The communication apparatus includes a processor configured to perform the method of any of the first or second aspect or implementations thereof.

In a fifth aspect, the present disclosure provides a communication apparatus. The communication apparatus includes a processor and a memory. The memory is configured to store computer-executable instructions. The processor is configured to invoke the program codes from the memory to perform the method of any of the first or second aspect or implementations thereof.

In a sixth aspect, the present disclosure provides a communication apparatus. The communication apparatus includes a processor and a transceiver. The transceiver is configured to receive or transmit a signal. The processor is configured to perform the method of any of the first or second aspect or implementations thereof.

In a seventh aspect, the present disclosure provides a communication apparatus. The communication apparatus includes a processor, a memory, and a transceiver. The transceiver is configured to receive or transmit a signal. The memory is configured to store program codes. The processor is configured to invoke the program codes from the memory to perform the method of any of the first or second aspect or implementations thereof.

In an eighth aspect, the present disclosure provides a chip. The chip is configured to receive network information, and obtain a CSI report based on the network information, where the CSI report includes CSI measurement results in a coherent joint transmission hypothesis for one or multiple stations.

In a ninth aspect, the present disclosure provides a chip. The chip is configured to obtain a CSI report, where the CSI report includes CSI measurement results in a coherent joint transmission hypothesis for one or multiple stations. The chip is further configured to determine a channel state based on the CSI report.

In a tenth aspect, the present disclosure provides a module device. The module device includes a communication module, a power module, a storage module, and a chip module. The power module is configured to power the module device. The storage module is configured to store data and instructions. The communication module is configured to carry out communication within the module device or communication between the module device and an external device. The chip module is configured to trigger the communication module to receive network information, and obtain a CSI report based on the network information, where the CSI report includes CSI measurement results in a coherent joint transmission hypothesis for one or multiple stations.

In an eleventh aspect, the present disclosure provides a module device. The module device includes a communication module, a power module, a storage module, and a chip module. The power module is configured to power the module device. The storage module is configured to store data and instructions. The communication module is configured to carry out communication within the module device or communication between the module device and an external device. The chip module is configured to trigger the communication module to obtain a CSI report, where the CSI report includes CSI measurement results in a coherent joint transmission hypothesis for one or a plurality of stations, and to determine a channel state based on the CSI report.

In a twelfth aspect, the present disclosure provides a computer-readable storage medium. The computer-readable storage medium stores computer-readable instructions which, when executed on a communication apparatus, cause the communication apparatus to perform the method of any of the first or second aspect or implementations thereof.

In a thirteenth aspect, the present disclosure provides a computer program or a computer program product including codes or instructions which, when executed on a computer, cause the computer to perform the method of any of the first or second aspect or implementations thereof.

### BRIEF DESCRIPTION OF THE DRAWINGS

In order to more clearly illustrate the technical solutions in embodiments of the present disclosure, the accompanying drawings to be used in the description of the embodiments will be briefly introduced below. Obviously, the accompanying drawings in the following description are only some of the embodiments of the present disclosure. For the person of ordinary skill in the art, other accompanying drawings can be obtained according to these drawings without creative efforts.
FIG. 1 is a schematic diagram of a network architecture provided in embodiments of the present disclosure.
FIG. 2 is a flowchart of obtaining a CSI report provided in embodiments of the present disclosure.
FIG. 3 is a schematic structural diagram of a communication apparatus provided in embodiments of the present disclosure.
FIG. 4 is a schematic structural diagram of another communication apparatus provided in embodiments of the present disclosure.
FIG. 5 is a schematic structural diagram of a module device provided in embodiments of the present disclosure.

### DETAILED DESCRIPTION

Technical solutions in embodiments of the disclosure will be described clearly and comprehensively below with reference to the accompanying drawings in the embodiments of the disclosure. Apparently, the embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms used in the following embodiments of the present disclosure are used only for the purpose of describing a particular embodiment and are not intended to be a limitation of the present disclosure. As used in the specification and appended claims of this disclosure, the singular expressions "a", "an", "the", "said," and "this" are intended to include plural expressions as well, unless the context clearly indicates otherwise. It should also be understood that the term "and/or" as used in this disclosure refers to and encompasses any or all possible combinations of one or more of the listed items.

It should be noted that the terms "first", "second", "third", etc. in the specification and claims of the present disclosure and in the accompanying drawings mentioned above are used to distinguish between similar objects and are not intended to be used to describe a particular order or sequence. It should be understood that the data so used may be interchanged, where appropriate, so that the embodiments of the present disclosure described herein can be implemented in an order other than that illustrated or described herein. In addition, the term "including" and any variations thereof are intended to cover non-exclusive inclusion, e.g., a process, method, system, product, or server that includes a series of steps or units need not be limited to those steps or units that are clearly listed, but may include other steps or units that are not clearly listed or are inherent to the process, method, product, or apparatus.

First, some of the terms involved in the embodiments of the present disclosure are explained to facilitate the understanding of those skilled in the art.

### 1. Terminal device

The terminal device in embodiments of the present disclosure is a device having a wireless communication function, and may be referred to as a terminal, a user equipment (UE), a mobile station (MS), a mobile terminal MT), an access terminal equipment, a vehicle-mounted terminal equipment, an industrial control terminal equipment, a UE unit, a UE station, a mobile station, a remote station, a remote terminal equipment, a mobile device, a UE terminal equipment, a wireless communication device, a UE agent, or a UE device. The terminal device may be stationary or mobile. It is noted that the terminal device may support at least one wireless communication technology, such as LTE, new radio (NR), and the like. For example, the terminal device may be a cell phone, a pad, a desktop computer, a laptop computer, an all-in-one computer, an in-vehicle terminal, a virtual reality (VR) terminal device, an augmented reality (AR) terminal device, a terminal device in industrial control, a wireless terminal in unmanned driving, a wireless terminals in remote medical surgery, a wireless terminal in smart grid, a wireless terminal in transportation safety, and a wireless terminal in smart city, a wireless terminal in smart home, a cellular phone, a cordless phone, a session initiation protocol (SIP) phone, a wireless local loop (WLL) station, a personal digital assistant (PDA), a handheld devices, computing devices or other processing devices connected to wireless modems with wireless communication capabilities, a wearable device, a terminal equipment in a future mobile communication network or in a future evolved public land mobile networks (PLMN), and the like. In some embodiments of the present disclosure, the terminal device may also be a device having a transceiver function, such as a chip system. The chip system may include a chip, and may also include other discrete devices, which are not limited in embodiments of the present disclosure.

### 2. Network device

A network device in embodiments of the present disclosure is a device that provides wireless communication functionality for the terminal device, which may also be referred to as a radio access network (RAN) device, or an access network network element, and the like. The network device may support at least one wireless communication technology, such as LTE, NR, and the like. Exemplarily, the network device includes, but is not limited to: a next-generation base station (gNB), an evolved node B (eNB), a radio network controller (RNC), a node B (NB), a base station controller (BSC), a base transceiver station (BTS), a home base station (e.g., home evolved node B, or home node B, HNB), a baseband unit (BU), a mobile switching center in the 5-th generation (5G) system, and so on. The network device may also be a wireless controller, a centralized unit (CU), and/or a distributed unit (DU) in a cloud radio access network (CRAN) scenario, or the network device may be a relay station, an access point, an in-vehicle device, a terminal device, a wearable device, and a network device in future mobile communication or in future evolved PLMN. In some embodiments, the network device may also be a device, such as a system-on-a-chip, having a function of providing wireless communication for a terminal device. Exemplarily, the system-on-chip may include a chip and may also include other discrete devices. In some embodiments, the network device may also be in communication with an Internet Protocol (IP) network, such as the Internet (internet), a private IP network, or other data network.

In embodiments of the present disclosure, a station may refer to a remote radio head (RRH) or a transmission and reception point (TRP), which is not limited herein.

### 3. Channel state information (CSI)

A CSI report is the channel state information used by the terminal device to feedback downlink channel quality to the network device, so that the network device can select an appropriate Modulation and Coding Scheme (MCS) for downlink data transmission, and reduce the Block Error Rate (BLER) of the downlink data transmission. Typically, the CSI report may be composed of one or more of: a Channel Quality Indicator (CQI), a Precoding Matrix Indicator (PMI), a Channel Status Information Reference Signal Resource Indicator (CSI-RS Resource Indicator, CRI), a Synchronization Signal Block Resource Indicator (SS/PBCH Block Resource Indicator, SSBRI), a Layer Indicator (LI), a Rank Indicator (RI), or Layer 1 Reference Signal Received Power (L1-RSR). Time and frequency domain resources required for transmission of the CSI report is controlled by the network device. The CSI report may be reported over a Physical Uplink Control Channel (PUCCH) or a Physical Uplink Shared Channel (PUSCH).

In New Radio (NR) R15/R16, a CSI report consists of two parts, where the first part has a fixed payload size and can be used to confirm the number of information bits in the second part. The CSI report contains only the CSI measurements under a one-station transmission hypothesis, as follows:
(1) CSI feedback for Type 1 (Type I): the first part includes RI, CRI, and CQI for the first codeword, and the second part includes PMI and CQI for the second codeword when RI is greater than 4.
(2) Type 2 CSI feedback (Type II): the first part includes RI, CQI, and an indication of the number of non-zero wideband amplitude coefficients for each layer, and the second part includes PMI.
(3) CSI feedback for enhanced Type II (enhanced Type II): the first part includes RI, CQI, and an indication of the total number of non-zero amplitude coefficients for all layers, and the second part includes PMI.

In addition, multi-TRP coherent joint transmission can be understood as that multiple TRPs or RRHs performs coherent joint transmission, or different data belonging to the same PDSCH is sent from different TRPs to the terminal device, or multiple TRPs or RRHs are virtualized into one TRP or RRH for transmission. The names that have the same meaning in the other standards are also applicable to the present disclosure, i.e., the present disclosure does not limit the names of these parameters.

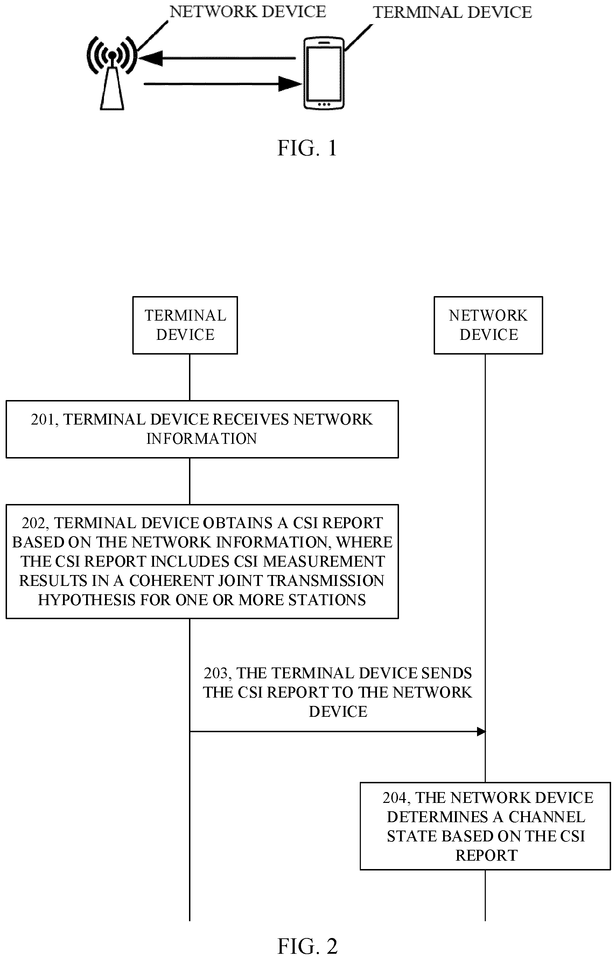

Embodiments of the present disclosure may be applied to a network architecture as shown in FIG. 1. The network architecture shown in FIG. 1 is a network architecture of a wireless communication system, which typically includes a terminal device and a network device. The number of devices as well as the forms of devices do not constitute a limitation of the embodiments of the present disclosure. The network device may be a Base Station (BS), which may provide communication services to multiple terminal devices. Also, multiple BSs may provide communication services to the same terminal device.

It should be noted that in the NR R15/R16 system, a CSI report contains only the CSI measurements in a one-station transmission hypothesis. Therefore, how to obtain a CSI report in a one-or-multi station coherent joint transmission hypothesis is an urgent problem to be solved.

In order for the terminal device to obtain the CSI report in a coherent joint transmission hypothesis for one or more stations, the present disclosure provides a method for obtaining a CSI report. In order for better understanding of the method for obtaining the CSI report provided in embodiments of the present disclosure, the method is described in detail in the following.

Referring to FIG. 2, FIG. 2 is a flowchart of a method for obtaining a CSI report provided in embodiments of the present disclosure. The method for obtaining a CSI report includes operations from 201 to 204. The method shown in FIG. 2 may be executed by a terminal device (exemplary, which may be shown in reference to FIG. 1), or by a chip in the terminal device. The method shown in FIG. 2 is executed by the terminal device as an example. The method includes, but is not limited to, the following operations.

At 201, the terminal device receives network information.

In embodiments of the present disclosure, the terminal device receives network information transmitted by a network device, and then the terminal device can obtain a CSI report in a coherent joint transmission hypothesis for one or more stations based on the network information. Here, the station may be referred to as RRH or TRP, which is not limited herein. Optionally, the network information includes codebook-type indication information, where the codebook-type indication information indicates a codebook type in the CSI report, or the codebook-type indication information indicates a codebook type of a codebook in the CSI report.

In a possible implementation, the codebook type includes a first codebook type and a second codebook type, where the first codebook type indicates obtaining a frequency-domain codebook for each of one or more stations, and the second codebook type indicates that one or more stations jointly obtain a frequency-domain codebook for the station(s). For the first codebook type, the frequency-domain codebook for each station is obtained by the respective station separately. That is, the frequency-domain codebook for each station may be unique. For the second codebook type, the frequency-domain codebook for each station is jointly obtained by all stations. That is, all stations determine the frequency-domain codebook in an aggregation manner, and frequency-domain codebook information for all stations are from this frequency-domain codebook.

In a possible implementation, the network information includes a first parameter, where the first parameter is used for determining a codebook type. Optionally, the first parameter includes a quantity (number) threshold of stations. The quantity threshold of stations may be configured by the network device.

Further optionally, the method further includes that if the quantity (number) of stations contained in the CSI report is greater than the quantity threshold, the terminal device determines that the codebook type in the CSI report is the first codebook type.

Further optionally, the method further includes that if the quantity (number) of stations contained in the CSI report is less than or equal to the quantity threshold, the terminal device determines that the codebook type in the CSI report is the second codebook type.

For example, the quantity threshold of stations is 6, and the quantity of stations contained in the CSI report is 7. In this case, the quantity of stations contained in the CSI report is greater than the quantity threshold, and thus the terminal device determines the codebook type in the CSI report as the first codebook type, that is, the frequency-domain codebooks corresponding to the stations contained in the CSI report are obtained separately by each station.

For another example, the quantity threshold of stations is 6, and the quantity of stations contained in the CSI report is 5. In this case, the quantity of stations contained in the CSI report is less than the quantity threshold, and thus the terminal device determines the codebook type in the CSI report as the second codebook type, that is, the frequency-domain codebooks corresponding to the stations contained in the CSI report are obtained jointly by all stations.

Further optionally, the method further includes that if the quantity of stations contained in the CSI report is greater than the quantity threshold, the terminal device determines that the codebook type in the CSI report is the second codebook type.

Further optionally, the method further includes that if the quantity of stations contained in the CSI report is less than or equal to the quantity threshold, the terminal device determines that the codebook type in the CSI report is the first codebook type.

At 202, the terminal device obtains the CSI report based on the network information. The CSI report includes CSI measurement results in a coherent joint transmission hypothesis for one or more stations.

In embodiments of the present disclosure, in the coherent joint transmission hypothesis for one or more stations, the terminal device can determine the codebook type in the CSI report according to the codebook-type indication information included in the network information, so as to obtain the CSI report. Based on such method, it is beneficial to achieve the acquisition of the CSI report by the terminal device in the coherent joint transmission hypothesis for one or more stations.

In a possible implementation, the CSI report includes first information and second information. Optionally, the first information includes at least one of: quantity information of stations, information of the number of non-zero wideband amplitude coefficients, or reference resource index indication information. Optionally, the second information includes all or part of CSI measurement results for the stations.

The first information has a fixed payload size, and may be used to determine the number of information bits in the second information. The first information may be CSI part I and the second information may be CSI part II. The names of the first information or second information are not limited in the present disclosure.

It should be noted that the quantity information of stations (information of the number of stations) can be obtained directly or indirectly through other information, without limitation. For example, the number of stations can be determined according to the number of reference resource indexes and/or a reference resource index codepoint. In addition, the information of the number of non-zero coefficients for the station may be information of the number of non-zero coefficients corresponding to each of the stations contained in the CSI report, or may be information of the number of non-zero coefficients corresponding to all stations contained in the CSI report. The information of the number of non-zero coefficients may be an indication of the number of non-zero wideband amplitude coefficients for each layer, or may be an indication of the total number of non-zero amplitude coefficients for all layers. It should be noted that the subsequent description about the information of the number of non-zero coefficients is the same as the description of about the information of the number of non-zero coefficients here, and will not be repeated in the following.

Optionally, the reference resource index indication information is obtained through a bitmap.

In a possible implementation, the second information includes PMI.

In a possible implementation, the second information includes at least one of: spatial-domain codebook information for each station of stations contained in the CSI report, frequency-domain codebook information for each station of the stations contained in the CSI report, non-zero coefficient information for each station of the stations contained in the CSI report, non-zero coefficient information, reference amplitude information for each layer for each station of the stations contained in the CSI report, strongest coefficient indication for each layer for each station of the stations contained in the CSI report, reference amplitude information for each layer for all stations contained in the CSI report, or strongest coefficient indication for each layer for all stations contained in the CSI report. Optionally, the frequency-domain codebook information for each station is the same or different. Optionally, all stations share the same reference amplitude information for each layer. Optionally, all stations share the same strongest coefficient indication for each layer.

The non-zero coefficient information may be position information of an element corresponding to the non-zero amplitude coefficient, amplitude information of the element corresponding to the non-zero amplitude coefficient, or phase information of the element corresponding to the non-zero amplitude coefficient. The frequency-domain codebook information may be an index indicating the frequency-domain codebook. The spatial-domain codebook information may be an index indicating the spatial-domain codebook. The strongest coefficient indication may be position information of the element corresponding to the strongest coefficient. It should be noted that the subsequent descriptions about the non-zero coefficient information, the frequency-domain codebook information, and the strongest coefficient indication are the same as the descriptions about the non-zero coefficient information, the frequency-domain codebook information, and the strongest coefficient indication here, and will not be repeated in the following.

In a possible implementation, the second information includes *i* groups of information, where *i* is the quantity of stations contained in the CSI report. Optionally, when the codebook type information contained in the network information indicates the first codebook type, the terminal device may divide the second information of the CSI report in this manner.

Optionally, a CSI measurement result for one station corresponds to one group of information. Specifically, a CSI measure result for which station is placed in which group of information is determined by the terminal device according to a measurement manner of the terminal device.

For example, the CSI report contains 3 stations, and the second information includes 3 groups of information. The first group of information corresponds to the CSI measurement result for the first station, the second group of information corresponds to the CSI measurement result for the third station, and the third group of information corresponds to the CSI measurement result for the second station.

Further optionally, the CSI measurement result for the station includes at least one of: reference amplitude information of a non-zero coefficient, spatial-domain codebook information, frequency-domain codebook information, non-zero coefficient information, a reference signal resource indicator index or a reference signal resource indicator index codepoint, or a strongest coefficient indication. It should be noted that the reference amplitude information of the non-zero coefficient includes a reference amplitude of the non-zero coefficient for each layer. The non-zero coefficient information includes non-zero coefficient information for each layer. The strongest coefficient indication includes a strongest coefficient indication for each layer.

In a possible implementation, the second information includes *i* groups of information, where *i* = *j*+1 and *j* is the quantity of stations contained in the CSI report. Optionally, when the codebook type information contained in the network information indicates the second codebook type, the terminal device can divide the second information of the CSI report in this manner.

Optionally, a first group in the *i* groups of information includes spatial-domain codebook information for each station.

Optionally, for groups other than the first group in the *i* groups of information, part or all of CSI measurement results for one station corresponds to one group of information.

For example, the CSI report contains 3 stations, and the second information includes 4 groups of information. The first group of information includes the spatial-domain codebook information for each station, the second group of information corresponds to the CSI measurement result for the first station, the third group of information corresponds to the CSI measurement result for the third station, and the fourth group of information corresponds to the CSI measurement result for the second station.

Further optionally, the part or all of CSI measurement results for the station includes at least one of: reference amplitude information of a non-zero coefficient, frequency-domain codebook information, non-zero coefficient information, a reference signal resource indicator index or a reference signal resource indicator index codepoint, or a strongest coefficient indication. It should be noted that the reference amplitude information of the non-zero coefficient includes a reference amplitude of the non-zero coefficient for each layer. The non-zero coefficient information includes non-zero coefficient information for each layer. The strongest coefficient indication includes a strongest coefficient indication for each layer.

In a possible implementation, the second information includes *i* groups of information, where an *x*-th group in the *i* groups of information includes at least one of: frequency-domain codebook information for each station, or reference amplitude information of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

For example, *x* is 1, *y* is 2, *z* is 3, and the second information includes 3 groups of information. The first group of information includes at least one of the following information: frequency-domain codebook information for each station, reference amplitude information of a non-zero coefficient for each station, and a strongest coefficient indication. The second group of information includes the spatial-domain codebook information for each station. The third group of information includes non-zero coefficient information for each station.

For another example, *x* is 1, *y* is 2, *z* is 3, and the second information includes 3 groups of information. The first group of information includes the spatial-domain codebook information for each station. The second group of information includes at least one of the following information: frequency-domain codebook information for each station, reference amplitude information of a non-zero coefficient for each station, and a strongest coefficient indication. The third group of information includes non-zero coefficient information for each station.

Optionally, the priority order of the *x*-th group of information, *y*-th group of information, and *z*-th group of information is the same as the ascending order of the values of *x*, *y,* and *z*.

For example, *x* is 1, *y* is 2, and *z* is 3. The priority of the first group of information is higher than that of the second group of information, and the priority of the second group of information is higher than that of the third group of information.

Optionally, the frequency-domain codebook information for each station is the same. Optionally, when the codebook type information contained in the network information indicates the second codebook type, the terminal device can divide the second information of the CSI report in this manner. It should be noted that the reference amplitude information of the non-zero coefficient includes a reference amplitude of the non-zero coefficient for each layer. The non-zero coefficient information includes non-zero coefficient information for each layer. The strongest coefficient indication includes a strongest coefficient indication for each layer.

In a possible implementation, the second information includes *i* groups of information, where *i* = *j*+2 *and j* is the quantity of stations contained in the CSI report. Optionally, when the codebook type information contained in the network information indicates the second codebook type, the terminal device can divide the second information of the CSI report in this manner.

Optionally, a first group in the *i* groups of information includes spatial-domain codebook information for each station.

Optionally, a second group in the *i* groups of information includes at least one of: frequency-domain codebook information for each station, reference amplitude information for each station, or a strongest coefficient indication for each station. Further optionally, the frequency-domain codebook information for each station is the same.

Optionally, for groups other than the first group and the second group in the *i* groups of information, part or all of CSI measurement results for one station corresponds to one group of information.

For example, the CSI report contains 3 stations, and the second information includes 5 groups of information. The first group of information includes the spatial-domain codebook information for each station, the second group of information includes the frequency-domain codebook information for each station and the reference amplitude information of each station, the third group of information corresponds to all or part of the CSI measurement results for the first station, and the fourth group of information corresponds to all or part of the CSI measurement results for the third station, The fifth group of information corresponds to all or part of the CSI measurement results for the second station.

Further optionally, the part or all of CSI measurement results for the station includes at least one of: reference amplitude information of a non-zero coefficient for the station, non-zero coefficient information for the station, or the strongest coefficient indication for the station.

In a possible implementation, the *i* groups of information are arranged according to priorities. The terminal device can determine the priority based on a position of each group of information in the CSI report, and the former the position, the higher the priority. That is to say, the smaller the value of *i*, the higher the priority of the *i*-th group of information. As an example, the priority of the third group of information is higher than that of the fourth group of information.

In a possible implementation, the CSI report further includes codebook-type information. The terminal device can place in the CSI report the codebook-type information contained in the network information, so as to indicate the codebook type in the CSI report.

At 203, the terminal device sends the CSI report to the network device.

At 204, the network device determines a channel state based on the CSI report.

In the following, a specific example is described.

For example, the terminal device receives network information, where the network information includes codebook-type indication information. The codebook-type indication information indicates the first codebook type. The terminal device obtains the CSI report divided as follows.

The CSI report contains three stations, namely station 1, station 2, and station 3. The CSI report is divided into first information and second information. The first information includes quantity information of stations, information of the number of non-zero coefficients for stations, and reference resource index indication information. The second information includes spatial-domain codebook information for each station contained in the CSI report, frequency-domain codebook information for each station contained in the CSI report, and non-zero coefficient information for each station contained in the CSI report. The frequency-domain codebook information for each station may be different. The codebook type indicated by the codebook-type indication information is the first codebook type. The terminal device can divide the second information such that the CSI measurement result for one station corresponds to one group of information. That is, the second information includes three groups of information. The first group of information corresponds to the CSI measurement result for the first station, the second group of information corresponds to the CSI measurement result for the third station, and the third group of information corresponds to the CSI measurement result for the second station. Therefore, the terminal device obtains the CSI report, which includes the CSI measurement results in the coherent joint transmission hypothesis for three stations. The terminal device then sends the CSI report to the network device, which can determine the channel state based on the CSI report.

In the method described with reference to FIG. 2, the terminal device receives the network information and then obtains the CSI report based on the network information, where the CSI report includes CSI measurement results in the coherent joint transmission hypothesis for one or more stations. The terminal device sends the CSI report to the network device, and the network device determines the channel state based on the CSI report. As a result, based on the method described with reference to FIG. 2, the terminal device can obtain the CSI report in the coherent joint transmission hypothesis for one or more stations.

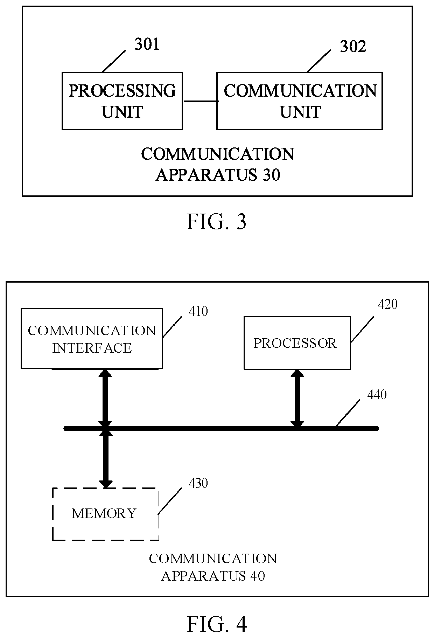

Referring to FIG. 3, FIG. 3 is a schematic structural diagram of a communication apparatus in embodiments of the present disclosure. The apparatus may be a terminal device, an apparatus in the terminal device, or an apparatus that can be used in conjunction with the terminal device. The communication apparatus 30 shown in FIG. 3 may include a processing unit 301 and a communication unit 302. The processing unit 301 is configured to perform data processing. The communication unit 302 integrates a receiving unit and a transmitting unit. The communication unit 302 may also be referred to as a transceiving unit. Alternatively, the communication unit 302 may be split into a receiving unit and a transmitting unit. The same applies to the processing unit 301 and the communication unit 302 below and will not be repeated again.

The communication unit 302 is configured to receive network information.

The processing unit 301 is configured to obtain a CSI report based on the network information, where the CSI report includes CSI measurement results in a coherent joint transmission hypothesis for one or more stations.

Optionally, the network information includes codebook-type indication information, where the codebook-type indication information indicates a codebook type in the CSI report.

Optionally, the codebook type includes a first codebook type and a second codebook type, where the first codebook type indicates obtaining a frequency-domain codebook for each of multiple stations, and the second codebook type indicates jointly obtaining a frequency-domain codebook for the stations.

Optionally, the network information includes a first parameter, where the first parameter is used for determining a codebook type.

Optionally, the first parameter includes a quantity threshold of stations.

Optionally, the codebook type includes a first codebook type and a second codebook type, where the first codebook type indicates obtaining a frequency-domain codebook for each of the multiple stations, and the second codebook type indicates jointly obtaining a frequency-domain codebook for the stations. The processing unit 301 is further configured to determine that the codebook type in the CSI report is the first codebook type when the quantity of stations contained in the CSI report is greater than the quantity threshold.

Optionally, the processing unit 301 is further configured to determine that the codebook type in the CSI report is the second codebook type when the quantity of stations contained in the CSI report is less than or equal to the quantity threshold.

Optionally, the CSI report includes first information and second information.

Optionally, the first information includes at least one of: quantity information of stations, information of the number of non-zero wideband amplitude coefficients, or reference resource index indication information.

Optionally, the second information includes all or part of CSI measurement results for the stations.

Optionally, the reference resource index indication information is obtained through a bitmap.

Optionally, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

Optionally, the second information includes i groups of information, where i is the quantity of stations contained in the CSI report.

Optionally, a CSI measurement result for one station corresponds to one group of information.

Optionally, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

Optionally, the second information includes *i* groups of information, where *i* = *j*+1 and *j* is the quantity of stations contained in the CSI report.

Optionally, a first group in the *i* groups of information includes spatial-domain codebook information for each station.

Optionally, for groups other than the first group in the *i* groups of information, part or all of CSI measurement results for one station corresponds to one group of information.

Optionally, the part or all of CSI measurement results for the station includes at least one of: reference amplitude information of a non-zero coefficient for the station, frequency-domain codebook information for the station, or a non-zero coefficient for the station.

Optionally, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

Optionally, the second information includes *i* groups of information, where *i* = *j*+2 and *j* is the quantity of stations contained in the CSI report.

Optionally, a first group in the *i* groups of information includes spatial-domain codebook information for each station.

Optionally, a second group in the *i* groups of information includes at least one of: frequency-domain codebook information for each station, or reference amplitude information for each station.

Optionally, the frequency-domain codebook information for each station is the same.

Optionally, for groups other than the first group and the second group in the *i* groups of information, part or all of CSI measurement results for one station corresponds to one group of information.

Optionally, the part or all of CSI measurement results for the station includes at least one of: reference amplitude information of a non-zero coefficient for the station, or non-zero coefficient information for the station.

Optionally, the *i* groups of information are arranged according to priorities.

Optionally, the CSI report further includes codebook-type information, where the codebook-type information indicates the codebook type in the CSI report.

The above-described communication apparatus may be, for example, a chip or a chip module. The various modules contained in the apparatus or product described in the above embodiments may be software modules or hardware modules, or part of the modules may be software modules and part of the modules may be hardware modules. For example, for the device or product applied to or integrated with a chip, modules contained therein may all be implemented by hardware such as circuits, or at least part of the modules may be implemented by software program which runs on a processor integrated within the chip, and the remaining modules, if any, may be implemented by hardware such as circuits. For example, for the device or product applied to or integrated with a chip module, modules contained therein may all be implemented by hardware such as circuits, with different modules in the same assembly (such as a chip, a circuit module) or different assemblies in the chip module, or at least part of the modules may be implemented by software program which runs on a processor integrated within the chip module, and the remaining modules, if any, may be implemented by hardware such as circuits. For example, for the device or product applied to or integrated with a terminal, modules contained therein may all be implemented by hardware such as circuits, with different modules in the same assembly (such as a chip, a circuit module) or different assemblies in the terminal, or at least part of the modules may be implemented by software program which runs on a processor integrated within the terminal, and the remaining modules, if any, may be implemented by hardware such as circuits.

Referring to FIG. 3, FIG. 3 is a schematic structural diagram of a communication apparatus in embodiments of the present disclosure. The apparatus may be a terminal device, an apparatus in the terminal device, or an apparatus that can be used in conjunction with the terminal device. The communication apparatus 30 shown in FIG. 3 may include a processing unit 301 and a communication unit 302. The processing unit 301 is configured to perform data processing. The communication unit 302 integrates a receiving unit and a transmitting unit. The communication unit 302 may also be referred to as a transceiving unit. Alternatively, the communication unit 302 may be split into a receiving unit and a transmitting unit. The same applies to the processing unit 301 and the communication unit 302 below and will not be repeated again.

The communication unit 302 is configured to obtain a CSI report, where the CSI report includes CSI measurement results in a coherent joint transmission hypothesis for one or more stations.

The processing unit 301 is configured to determine a channel state according the channel report.

Optionally, the CSI report includes first information and second information.

Optionally, the first information includes at least one of: quantity information of stations, information of the number of non-zero wideband amplitude coefficients, or reference resource index indication information.

Optionally, the second information includes all or part of CSI measurement results for the stations.

Optionally, the reference resource index indication information is obtained through a bitmap.

Optionally, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

Optionally, the second information includes *i* groups of information, where *i* is the quantity of stations contained in the CSI report.

Optionally, a CSI measurement result for one station corresponds to one group of information.

Optionally, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

Optionally, the second information includes *i* groups of information, where *i* = *j*+1 and *j* is the quantity of stations contained in the CSI report.

Optionally, a first group in the *i* groups of information includes spatial-domain codebook information for each station.

Optionally, for groups other than the first group in the *i* groups of information, part or all of CSI measurement results for one station corresponds to one group of information.

Optionally, the part or all of CSI measurement results for the station includes at least one of: reference amplitude information of a non-zero coefficient for the station, frequency-domain codebook information for the station, or non-zero coefficient information for the station.

Optionally, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

Optionally, the second information includes *i* groups of information, where *i* = *j*+2 and *j* is the quantity of stations contained in the CSI report.

Optionally, a first group in the *i* groups of information includes spatial-domain codebook information for each station.

Optionally, a second group in the *i* groups of information includes at least one of: frequency-domain codebook information for each station, or reference amplitude information for each station.

Optionally, the frequency-domain codebook information for each station is the same.

Optionally, for groups other than the first group and the second group in the *i* groups of information, part or all of CSI measurement results for one station corresponds to one group of information.

Optionally, the part or all of CSI measurement results for the station includes at least one of: reference amplitude information of a non-zero coefficient for the station, or non-zero coefficient information for the station.

Optionally, the *i* groups of information are arranged according to priorities.

Optionally, the CSI report further includes codebook-type information, where the codebook-type information indicates the codebook type in the CSI report.

The above-described communication apparatus may be, for example, a chip or a chip module. The various modules contained in the apparatus or product described in the above embodiments may be software modules or hardware modules, or part of the modules may be software modules and part of the modules may be hardware modules. For example, for the device or product applied to or integrated with a chip, modules contained therein may all be implemented by hardware such as circuits, or at least part of the modules may be implemented by software program which runs on a processor integrated within the chip, and the remaining modules, if any, may be implemented by hardware such as circuits. For example, for the device or product applied to or integrated with a chip module, modules contained therein may all be implemented by hardware such as circuits, with different modules in the same assembly (such as a chip, a circuit module) or different assemblies in the chip module, or at least part of the modules may be implemented by software program which runs on a processor integrated within the chip module, and the remaining modules, if any, may be implemented by hardware such as circuits. For example, for the device or product applied to or integrated with a terminal, modules contained therein may all be implemented by hardware such as circuits, with different modules in the same assembly (such as a chip, a circuit module) or different assemblies in the terminal, or at least part of the modules may be implemented by software program which runs on a processor integrated within the terminal, and the remaining modules, if any, may be implemented by hardware such as circuits.

FIG. 4 illustrates another communication apparatus 40 in embodiments of the present application, which is configured to implement functions of the terminal device shown in FIG. 2. The apparatus may be a terminal device or an apparatus used for the terminal device, and the apparatus used for the terminal device may be a chip system or a chip in the terminal device. The chip system may be formed by a chip, and may also include a chip and other discrete components.

The communication apparatus 40 includes at least one processor 420 configured to implement a data processing function of the terminal device in the method provided in the embodiments of the present disclosure. The apparatus 40 may further include a communication interface 410 configured to implement receiving and transmitting operations of the terminal device in the method provided in the embodiments of the present disclosure. In embodiments of the present disclosure, the communication interface may be a transceiver, a circuit, a bus, a module, or other type of communication interface for communicating over a transmission medium with other devices. For example, the communications interface 410 is configured to enable the apparatus 40 to communicate with other devices. The processor 420 receives and sends data by using the communications interface 410 and is configured to implement the method described in the foregoing method embodiments shown in FIG. 2.

The apparatus 40 may also include at least one memory 430 for storing program instructions and/or data. The memory 430 is coupled to the processor 420. The coupling in the embodiments of the present disclosure is indirect coupling or communication connection between devices, units or modules, and may be in electrical, mechanical or other forms, for information interaction between devices, units or modules. The processor 420 may operate in conjunction with the memory 430. The processor 420 may execute program instructions stored in the memory 430. At least one of the at least one memory may be included in the processor.

After the apparatus 40 is powered on, the processor 420 may read a software program in the memory 430, interpret and execute instructions of the software program, and process data of the software program. When data needs to be sent in a wireless manner, after baseband processing is performed on the data to be sent, the processor 420 outputs a baseband signal to a radio frequency circuit (not shown), and after performing radio frequency processing on the baseband signal, the radio frequency circuit transmits a radio frequency signal in the form of an electromagnetic wave through an antenna. When data is sent to the apparatus 40, the radio frequency circuit receives a radio frequency signal through an antenna, converts the radio frequency signal into a baseband signal, and outputs the baseband signal to the processor 420. The processor 420 converts the baseband signal into data and processes the data.

In another implementation, the radio frequency circuit and the antenna may be disposed separately from the processor 420 that performs baseband processing. For example, in a distributed scenario, the radio frequency circuit and the antenna may be disposed in a remote manner separately from the communication apparatus.

The embodiments of the present disclosure does not limit a specific connection medium among the foregoing communication interface 410, the processor 420, and the memory 430. In the embodiments of the present disclosure, in FIG. 4, the memory 430, the processor 420, and the communication interface 410 are connected by a bus 440, where the bus is shown by a thick line in FIG. 4. The connection manner between other components is only for illustrative description and is not limited thereto. The bus may be classified into an address bus, a data bus, a control bus, and the like. For ease of representation, FIG. 4 uses only one thick line to represent the bus, which does not represent that there is only one bus or one type of bus.

When the apparatus 40 is specifically applied to a terminal device, for example, when the apparatus 40 is specifically a chip or a chip system, a baseband signal may be output or received by the communications interface 410. When the apparatus 40 is specifically a terminal device, a radio frequency signal may be output or received by the communications interface 410. In the embodiments of the present disclosure, the processor may be a general processor, a digital signal processor, an application-specific integrated circuit, a field programmable gate array or another programmable logic device, a discrete gate or transistor logic device, or a discrete hardware component, which may implement or execute the methods, operations and logic block diagrams disclosed in the embodiments of the present disclosure. The general-purpose processor may be a microprocessor or any conventional processor. Operations of the methods disclosed in the embodiments of the present application may be directly implemented by a hardware processor, or implemented by a combination of hardware and software modules in the processor.

It should be noted that, the communication apparatus may execute operations related to the terminal device or the access network device in the foregoing method embodiments, and for details, reference may be made to the implementations provided in the foregoing, which are not described herein again.

For the device or product applied to or integrated with the communication apparatus, modules contained therein may all be implemented by hardware such as circuits, with different modules in the same assembly (such as a chip, a circuit module) or different assemblies in the terminal, or at least part of the modules may be implemented by software program which runs on a processor integrated within the terminal, and the remaining modules, if any, may be implemented by hardware such as circuits.

Embodiments of the present disclosure further provide a chip including a processor and a communication interface. The processor is configured to perform the following operations: receiving network information, and obtaining a CSI report based on the network information. The CSI report includes CSI measurement results in a coherent joint transmission hypothesis for one or more stations.

Optionally, the network information includes codebook-type indication information, where the codebook-type indication information indicates a codebook type in the CSI report.

Optionally, the codebook type includes a first codebook type and a second codebook type, where the first codebook type indicates obtaining a frequency-domain codebook for each of multiple stations, and the second codebook type indicates jointly obtaining a frequency-domain codebook for the stations.

Optionally, the network information includes a first parameter, where the first parameter is used for determining a codebook type.

Optionally, the first parameter includes a quantity threshold of stations.

Optionally, the codebook type includes a first codebook type and a second codebook type, where the first codebook type indicates obtaining a frequency-domain codebook for each of the multiple stations, and the second codebook type indicates jointly obtaining a frequency-domain codebook for the stations. The chip is further configured to determine that the codebook type in the CSI report is the first codebook type in response to the quantity of stations contained in the CSI report being greater than the quantity threshold.

Optionally, the chip is further configured to determine that the codebook type in the CSI report is the second codebook type in response to the quantity of stations contained in the CSI report being less than or equal to the quantity threshold.

Optionally, the CSI report includes first information and second information.

Optionally, the first information includes at least one of: quantity information of stations, information of the number of non-zero wideband amplitude coefficients, or reference resource index indication information.

Optionally, the second information includes all or part of CSI measurement results for the stations.

Optionally, the reference resource index indication information is obtained through a bitmap.

Optionally, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

Optionally, the second information includes *i* groups of information, where *i* is the quantity of stations contained in the CSI report.

Optionally, a CSI measurement result for one station corresponds to one group of information.

Optionally, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

Optionally, the second information includes i groups of information, where *i* = *j*+1 and *j* is a quantity of stations contained in the CSI report.

Optionally, a first group in the *i* groups of information includes spatial-domain codebook information for each station.

Optionally, for groups other than the first group in the *i* groups of information, part or all of CSI measurement results for one station corresponds to one group of information.

Optionally, the part or all of CSI measurement results for the station includes at least one of: reference amplitude information of a non-zero coefficient for the station, frequency-domain codebook information for the station, or non-zero coefficient information for the station.

Optionally, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

Optionally, the second information includes *i* groups of information, where *i* = *j*+2 and *j* is a quantity of stations contained in the CSI report.

Optionally, a first group in the *i* groups of information includes spatial-domain codebook information for each station.

Optionally, a second group in the *i* groups of information includes at least one of: frequency-domain codebook information for each station, or reference amplitude information for each station.

Optionally, the frequency-domain codebook information for each station is the same.

Optionally, for groups other than the first group and the second group in the *i* groups of information, part or all of CSI measurement results for one station corresponds to one group of information.

Optionally, the part or all of CSI measurement results for the station includes at least one of: reference amplitude information of a non-zero coefficient for the station, or non-zero coefficient information for the station.

Optionally, the *i* groups of information are arranged according to priorities.

Optionally, the CSI report further includes codebook-type information, where the codebook-type information indicates a codebook type in the CSI report.

In a possible implementation, the chip includes at least one processor, at least one first memory, and at least one second memory. The at least one first memory and the at least one processor are interconnected by a line, with instructions stored in the first memory. The at least one second memory and the at least one processor are interconnected by a line, with data to be stored in the method embodiments stored in the second memory.

For the device or product applied to or integrated with the chip, modules contained therein may all be implemented in hardware, such as circuits, or at least some of the modules may be implemented by software program running on a processor integrated within the chip, and the remaining modules, if any, may be implemented in hardware, such as circuits.

Embodiments of the present disclosure further provide a chip including a processor and a communication interface. The processor is configured to perform the following operations: obtaining a CSI report, where the CSI report includes CSI measurement results in a coherent joint transmission hypothesis for one or multiple stations; and determining a channel state based on the CSI report.

Optionally, the CSI report includes first information and second information.

Optionally, the first information includes at least one of: quantity information of stations, information of the number of non-zero wideband amplitude coefficients, or reference resource index indication information.

Optionally, the second information includes all or part of CSI measurement results for the stations.

Optionally, the reference resource index indication information is obtained through a bitmap.

Optionally, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

Optionally, the second information includes *i* groups of information, where *i* is a quantity of stations contained in the CSI report.

Optionally, a CSI measurement result for one station corresponds to one group of information.

Optionally, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

Optionally, the second information includes *i* groups of information, where *i* = *j*+1 and *j* is a quantity of stations contained in the CSI report.

Optionally, a first group in the *i* groups of information includes spatial-domain codebook information for each station.

Optionally, for groups other than the first group in the *i* groups of information, part or all of CSI measurement results for one station corresponds to one group of information.

Optionally, the part or all of CSI measurement results for the station includes at least one of: reference amplitude information of a non-zero coefficient for the station, frequency-domain codebook information for the station, or non-zero coefficient information for the station.

Optionally, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

Optionally, the second information includes *i* groups of information, where *i* = *j*+2 and *j* is a quantity of stations contained in the CSI report.

Optionally, a first group in the *i* groups of information includes spatial-domain codebook information for each station.

Optionally, a second group in the *i* groups of information includes at least one of: frequency-domain codebook information for each station, or reference amplitude information for each station.

Optionally, the frequency-domain codebook information for each station is the same.

Optionally, for groups other than the first group and the second group in the *i* groups of information, part or all of CSI measurement results for one station corresponds to one group of information.

Optionally, the part or all of CSI measurement results for the station includes at least one of: reference amplitude information of a non-zero coefficient for the station, or non-zero coefficient information for the station.

Optionally, the *i* groups of information are arranged according to priorities.

Optionally, the CSI report further includes codebook-type information, where the codebook-type information indicates a codebook type in the CSI report.

In a possible implementation, the chip includes at least one processor, at least one first memory, and at least one second memory. The at least one first memory and the at least one processor are interconnected by a line, with instructions stored in the first memory. The at least one second memory and the at least one processor are interconnected by a line, with data to be stored in the method embodiments stored in the second memory.

For the device or product applied to or integrated with the chip, modules contained therein may all be implemented in hardware, such as circuits, or at least some of the modules may be implemented by software program running on a processor integrated within the chip, and the remaining modules, if any, may be implemented in hardware, such as circuits.

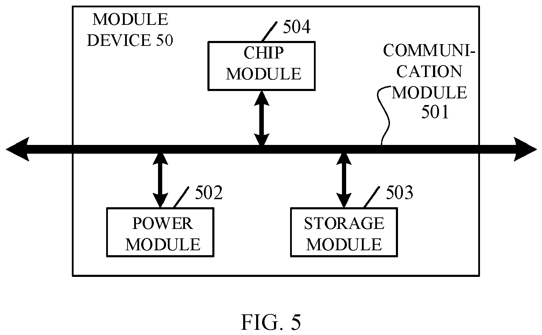

As shown in FIG. 5, FIG. 5 is a schematic structural diagram of a module device provided in embodiments of the present disclosure. The module device 50 can perform operations related to the terminal device in the forgoing method embodiments. The module device 50 includes a communication module 501, a power module 502, a storage module 503, and a chip module 504.

The power module 502 is configured to power the module device. The storage module 503 is configured to store data and instructions. The communication module 501 is configured to carry out communication within the module device or communication between the module device and an external device. The chip module 504 is configured to receive network information, and obtain a CSI report based on the network information, where the CSI report includes CSI measurement results in a coherent joint transmission hypothesis for one or a plurality of stations.

Optionally, the network information includes codebook-type indication information, where the codebook-type indication information indicates a codebook type in the CSI report.

Optionally, the codebook type includes a first codebook type and a second codebook type, where the first codebook type indicates obtaining a frequency-domain codebook for each of multiple stations, and the second codebook type indicates jointly obtaining a frequency-domain codebook for the stations.

Optionally, the network information includes a first parameter, where the first parameter is used for determining a codebook type.

Optionally, the first parameter includes a quantity threshold of stations.

Optionally, the codebook type includes a first codebook type and a second codebook type, where the first codebook type indicates obtaining a frequency-domain codebook for each of the multiple stations, and the second codebook type indicates jointly obtaining a frequency-domain codebook for the stations. The chip module 504 is further configured to determine that the codebook type in the CSI report is the first codebook type in response to a quantity of stations contained in the CSI report being greater than the quantity threshold.

Optionally, the chip module 504 is further configured to determine that the codebook type in the CSI report is the second codebook type in response to the quantity of stations contained in the CSI report being less than or equal to the quantity threshold.

Optionally, the CSI report includes first information and second information.

Optionally, the first information includes at least one of: quantity information of stations, information of the number of non-zero wideband amplitude coefficients, or reference resource index indication information.

Optionally, the second information includes all or part of CSI measurement results for the stations.

Optionally, the reference resource index indication information is obtained through a bitmap.

Optionally, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

Optionally, the second information includes *i* groups of information, where *i* is a quantity of stations contained in the CSI report.

Optionally, a CSI measurement result for one station corresponds to one group of information.

Optionally, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

Optionally, the second information includes *i* groups of information, where *i* = *j*+1 and *j* is a quantity of stations contained in the CSI report.

Optionally, a first group in the *i* groups of information includes spatial-domain codebook information for each station.

Optionally, for groups other than the first group in the *i* groups of information, part or all of CSI measurement results for one station corresponds to one group of information.

Optionally, the part or all of CSI measurement results for the station includes at least one of: reference amplitude information of a non-zero coefficient for the station, frequency-domain codebook information for the station, or non-zero coefficient information for the station.

Optionally, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

Optionally, the second information includes *i* groups of information, where *i* = *j*+2 and *j* is a quantity of stations contained in the CSI report.

Optionally, a first group in the i groups of information includes spatial-domain codebook information for each station.

Optionally, a second group in the i groups of information includes at least one of: frequency-domain codebook information for each station, or reference amplitude information for each station.

Optionally, the frequency-domain codebook information for each station is the same.

Optionally, for groups other than the first group and the second group in the *i* groups of information, part or all of CSI measurement results for one station corresponds to one group of information.

Optionally, the part or all of CSI measurement results for the station includes at least one of: reference amplitude information of a non-zero coefficient for the station, or non-zero coefficient information for the station.

Optionally, the *i* groups of information are arranged according to priorities.

Optionally, the CSI report further includes codebook-type information, where the codebook-type information indicates a codebook type in the CSI report.

For the device or product applied to or integrated with the chip module, modules contained therein may all be implemented by hardware such as circuits, with different modules in the same assembly (such as a chip, a circuit module) or different assemblies in the chip module, or at least part of the modules may be implemented by software program which runs on a processor integrated within the chip module, and the remaining modules, if any, may be implemented by hardware such as circuits. Embodiments of the present disclosure further provide a computer readable storage medium. The computer readable storage medium stores instructions. When the instructions run on a processor, the method in the method embodiments can be implemented.

As shown in FIG. 5, FIG. 5 is a schematic structural diagram of a module device provided in embodiments of the present disclosure. The module device 50 can perform operations related to the terminal device in the forgoing method embodiments. The module device 50 includes a communication module 501, a power module 502, a storage module 503, and a chip module 504.

The power module 502 is configured to power the module device. The storage module 503 is configured to store data and instruction. The communication module 501 is configured to carry out internal communication within the module device or communication between the module device and an external device. The chip module 504 is configured to obtain a CSI report, where the CSI report includes CSI measurement results in a coherent joint transmission hypothesis for one or multiple stations. The chip module 504 is further configured to determine a channel state based on the CSI report.

Optionally, the CSI report includes first information and second information.

Optionally, the first information includes at least one of: quantity information of stations, information of the number of non-zero wideband amplitude coefficients, or reference resource index indication information.

Optionally, the second information includes all or part of CSI measurement results for the stations.

Optionally, the reference resource index indication information is obtained through a bitmap.

Optionally, the second information includes at least one of: spatial-domain codebook information for each station of stations contained in the CSI report, frequency-domain codebook information for each station of the stations contained in the CSI report, or non-zero coefficient information for each station of the stations contained in the CSI report, where the frequency-domain codebook information for each station is the same or different.

Optionally, the second information includes *i* groups of information, where *i* is a quantity of stations contained in the CSI report.

Optionally, a CSI measurement result for one station corresponds to one group of information.

Optionally, the CSI measurement result for the station includes at least one of: reference amplitude information of a non-zero coefficient, spatial-domain codebook information, frequency-domain codebook information, non-zero coefficient information, a reference signal resource indicator index, or a reference signal resource indicator index codepoint.

Optionally, the second information includes *i* groups of information, where *i* = *j*+1 and *j* is a quantity of stations contained in the CSI report.

Optionally, a first group in the *i* groups of information includes spatial-domain codebook information for each station.

Optionally, for groups other than the first group in the *i* groups of information, part or all of CSI measurement results for one station corresponds to one group of information.

Optionally, the part or all of CSI measurement results for the station includes at least one of: reference amplitude information of a non-zero coefficient for the station, frequency-domain codebook information for the station, or non-zero coefficient information for the station.

Optionally, the second information includes *i* groups of information, where an *x*-th group in the *i* groups of information includes at least one of: frequency-domain codebook information for each station, or a reference position of a non-zero coefficient for each station, *x* being a positive integer; a *y*-th group in the *i* groups of information includes spatial-domain codebook information for each station, *y* being a positive integer; and a *z*-th group in the *i* groups of information includes non-zero coefficient information for each station, *z* being a positive integer.

Optionally, the second information includes *i* groups of information, where *i* = *j*+2 and *j* is a quantity of stations contained in the CSI report.

Optionally, a first group in the *i* groups of information includes spatial-domain codebook information for each station.

Optionally, a second group in the *i* groups of information includes at least one of: frequency-domain codebook information for each station, or reference amplitude information for each station.

Optionally, the frequency-domain codebook information for each station is the same.

Optionally, for groups other than the first group and the second group in the *i* groups of information, part or all of CSI measurement results for one station corresponds to one group of information.

Optionally, the part or all of CSI measurement results for the station includes at least one of: reference amplitude information of a non-zero coefficient for the station, or non-zero coefficient information for the station.

Optionally, the *i* groups of information are arranged according to priorities.

Optionally, the CSI report further includes codebook-type information, where the codebook-type information indicates a codebook type in the CSI report.

For the device or product applied to or integrated with the chip module, modules contained therein may all be implemented by hardware such as circuits, with different modules in the same assembly (such as a chip, a circuit module) or different assemblies in the chip module, or at least part of the modules may be implemented by software program which runs on a processor integrated within the chip module, and the remaining modules, if any, may be implemented by hardware such as circuits. Embodiments of the present disclosure further provide a computer readable storage medium. The computer readable storage medium stores instructions. When the instructions run on a processor, the method in the method embodiments can be implemented.

Embodiments of the present disclosure also provide a computer program product, where the method in the foregoing method embodiments can be performed when the computer program product is run on a processor.

It should be noted that, each of the foregoing method embodiments is expressed as a combination of a series of actions for the sake of simplicity of description, but a person skilled in the art should be aware that the present disclosure is not limited by the order of the described actions, because certain operations may be performed in other orders or simultaneously according to the present disclosure. In addition, the person skilled in the art should also be aware that the embodiments described in the specification are some embodiments, and the actions and modules involved are not necessarily necessary for the present disclosure.

The descriptions of the embodiments provided in the present disclosure may be cross-referenced, and the descriptions of each embodiment have their own focuses. The parts that are not described in detail in a certain embodiment may be referred to the relevant descriptions of other embodiments. For the convenience and conciseness of the description, for example, the functions of the various devices and equipment as well as the operations performed in the embodiments of the present disclosure can be referred to the relevant descriptions of the method embodiments of the present disclosure. The method embodiments can be cross-referenced, combined, or cited with each other, as well as the device embodiments.

Finally, it should be noted that the above embodiments are only used to illustrate the technical solutions of the present disclosure, and are not intended to limit the disclosure. Although the present disclosure has been described in detail with reference to the foregoing embodiments, a person of ordinary skill in the art should understand that it is still possible to make modifications to the technical solutions recorded in the foregoing embodiments, or to make equivalent replacements for some or all of the technical features therein. Such modifications or replacements do not take the essence of the corresponding technical solutions out of the scope of the technical solutions of the embodiments of the present disclosure.

## Claims

1. A method for obtaining a channel state information (CSI) report, comprising:
receiving network information; and
obtaining a CSI report based on the network information, the CSI report comprising CSI measurement results in a coherent joint transmission hypothesis for one or a plurality of stations.

2. The method of claim 1, wherein the network information comprises codebook-type indication information, the codebook-type indication information indicating a codebook type in the CSI report.

3. The method of claim 1 or 2, wherein the codebook type comprises a first codebook type and a second codebook type, the first codebook type indicating obtaining a frequency-domain codebook for each of the plurality of stations, the second codebook type indicating jointly obtaining a frequency-domain codebook for the stations.

4. The method of claim 1, wherein the network information comprises a first parameter, the first parameter being used for determining a codebook type.

5. The method of claim 4, wherein the first parameter comprises a quantity threshold of stations.

6. The method of claim 5, wherein the codebook type comprises a first codebook type and a second codebook type, the first codebook type indicating obtaining a frequency-domain codebook for each of the plurality of stations, the second codebook type indicating jointly obtaining a frequency-domain codebook for the stations, and the method further comprises:
determining that the codebook type in the CSI report is the first codebook type in response to a quantity of stations contained in the CSI report being greater than the quantity threshold.

7. The method of claim 6, further comprising:
determining that the codebook type in the CSI report is the second codebook type in response to the quantity of stations contained in the CSI report being less than or equal to the quantity threshold.

8. The method of claim 1, wherein the CSI report comprises first information and second information.

9. The method of claim 8, wherein the first information comprises at least one of: quantity information of stations, information of the number of non-zero wideband amplitude coefficients, or reference resource index indication information.

10. The method of claim 8, wherein the second information comprises all or part of CSI measurement results for the stations.

11. The method of claim 9, wherein the reference resource index indication information is obtained through a bitmap.

12. The method of any one of claims 8-10, wherein the second information comprises at least one of: spatial-domain codebook information for each station of stations contained in the CSI report, frequency-domain codebook information for each station of the stations contained in the CSI report, or non-zero coefficient information for each station of the stations contained in the CSI report, wherein the frequency-domain codebook information for each station is the same or different.

13. The method of any one of claims 8-12, wherein the second information comprises *i* groups of information, wherein *i* is a quantity of stations contained in the CSI report.

14. The method of claim 13, wherein a CSI measurement result for one station corresponds to one group of information.

15. The method of claim 14, wherein the CSI measurement result for the station comprises at least one of: reference amplitude information of a non-zero coefficient, spatial-domain codebook information, frequency-domain codebook information, non-zero coefficient information, a reference signal resource indicator index, or a reference signal resource indicator index codepoint.

16. The method of any one of claims 8-12, wherein the second information comprises *i* groups of information, wherein *i* = *j*+1 and *j* is a quantity of stations contained in the CSI report.

17. The method of claim 16, wherein a first group in the *i* groups of information comprises spatial-domain codebook information for each station.

18. The method of claim 16, wherein for groups other than the first group in the *i* groups of information, part or all of CSI measurement results for one station corresponds to one group of information.

19. The method of claim 18, wherein the part or all of CSI measurement results for the station comprises at least one of: reference amplitude information of a non-zero coefficient for the station, frequency-domain codebook information for the station, or non-zero coefficient information for the station.

20. The method of any one of claims 8-12, wherein the second information comprises *i* groups of information, and
an *x*-th group in the *i* groups of information comprises at least one of: frequency-domain codebook information for each station, or reference amplitude information of a non-zero coefficient for each station, *x* being a positive integer;
a *y*-th group in the *i* groups of information comprises spatial-domain codebook information for each station, *y* being a positive integer; and
a *z*-th group in the *i* groups of information comprises non-zero coefficient information for each station, *z* being a positive integer.

21. The method of any one of claims 8-12, wherein the second information comprises *i* groups of information, wherein *i* = *j*+2 and *j* is a quantity of stations contained in the CSI report.

22. The method of claim 21, wherein a first group in the *i* groups of information comprises spatial-domain codebook information for each station.

23. The method of claim 21 or 22, wherein a second group in the *i* groups of information comprises at least one of: frequency-domain codebook information for each station, or reference amplitude information for each station.

24. The method of any one of claims 8-23, wherein the frequency-domain codebook information for each station is the same.

25. The method of claim 21, wherein for groups other than the first group and the second group in the *i* groups of information, part or all of CSI measurement results for one station corresponds to one group of information.

26. The method of claim 25, wherein the part or all of CSI measurement results for the station comprises at least one of: reference amplitude information of a non-zero coefficient for the station, or non-zero coefficient information for the station.

27. The method of any one of claims 13-26, wherein the *i* groups of information are arranged according to priorities.

28. The method of any one of claims 1-26, wherein the CSI report further comprises codebook-type information, the codebook-type information indicating a codebook type in the CSI report.

29. A method for obtaining a channel state information (CSI) report, comprising:
obtaining a CSI report, the CSI report comprising CSI measurement results in a coherent joint transmission hypothesis for one or a plurality of stations; and
determining a channel state based on the CSI report.

30. The method of claim 29, wherein the CSI report comprises first information and second information.

31. The method of claim 30, wherein the first information comprises at least one of: quantity information of stations, information of the number of non-zero wideband amplitude coefficients, or reference resource index indication information.

32. The method of claim 30, wherein the second information comprises all or part of CSI measurement results for the stations.

33. The method of claim 31, wherein the reference resource index indication information is obtained through a bitmap.

34. The method of any one of claims 30-32, wherein the second information comprises at least one of: spatial-domain codebook information for each station of stations contained in the CSI report, frequency-domain codebook information for each station of the stations contained in the CSI report, or non-zero coefficient information for each station of the stations contained in the CSI report, wherein the frequency-domain codebook information for each station is the same or different.

35. The method of any one of claims 30-34, wherein the second information comprises *i* groups of information, wherein *i* is a quantity of stations contained in the CSI report.

36. The method of claim 35, wherein a CSI measurement result for one station corresponds to one group of information.

37. The method of claim 36, wherein the CSI measurement result for the station comprises at least one of: reference amplitude information of a non-zero coefficient, spatial-domain codebook information, frequency-domain codebook information, non-zero coefficient information, a reference signal resource indicator index, or a reference signal resource indicator index codepoint.

38. The method of any one of claims 30-34, wherein the second information comprises *i* groups of information, wherein *i* = *j*+1 and *j* is a quantity of stations contained in the CSI report.

39. The method of claim 38, wherein a first group in the *i* groups of information comprises spatial-domain codebook information for each station.

40. The method of claim 38, wherein for groups other than the first group in the *i* groups of information, part or all of CSI measurement results for one station corresponds to one group of information.

41. The method of claim 40, wherein the part or all of CSI measurement results for the station comprises at least one of: reference amplitude information of a non-zero coefficient for the station, frequency-domain codebook information for the station, or non-zero coefficient information for the station.

42. The method of any one of claims 30-34, wherein the second information comprises *i* groups of information, and
an *x*-th group in the *i* groups of information comprises at least one of: frequency-domain codebook information for each station, or reference amplitude information of a non-zero coefficient for each station, *x* being a positive integer;
a *y*-th group in the *i* groups of information comprises spatial-domain codebook information for each station, *y* being a positive integer; and
a *z*-th group in the *i* groups of information comprises non-zero coefficient information for each station, *z* being a positive integer.

43. The method of any one of claims 30-34, wherein the second information comprises *i* groups of information, wherein *i* = *j*+2 and *j* is a quantity of stations contained in the CSI report.

44. The method of claim 43, wherein a first group in the *i* groups of information comprises spatial-domain codebook information for each station.

45. The method of claim 43 or 44, wherein a second group in the *i* groups of information comprises at least one of: frequency-domain codebook information for each station, or reference amplitude information for each station.

46. The method of any one of claims 30-45, wherein the frequency-domain codebook information for each station is the same.

47. The method of claim 43, wherein for groups other than the first group and the second group in the *i* groups of information, part or all of CSI measurement results for one station corresponds to one group of information.

48. The method of claim 47, wherein the part or all of CSI measurement results for the station comprises at least one of: reference amplitude information of a non-zero coefficient for the station, or non-zero coefficient information for the station.

49. The method of any one of claims 35-48, wherein the i groups of information are arranged according to priorities.

50. The method of any one of claims 29-48, wherein the CSI report further comprises codebook-type information, the codebook-type information indicating a codebook type in the CSI report.

51. A communication apparatus, comprising units for performing the method of any one of claims 1-50.

52. A communication apparatus, comprising a processor and a transceiver, wherein
the transceiver is configured to receive or transmit a signal; and
the processor is configured to perform the method of any one of claims 1-50.

53. The communication apparatus of claim 52, further comprising a memory, wherein
the memory is configured to store a computer program; and
the processor is configured to invoke a computer program from the memory to cause the communication apparatus to perform the method of any one of claims 1-50.

54. A chip, configured to:
receive network information; and
obtain a channel state information (CSI) report based on the network information, the CSI report comprising CSI measurement results in a coherent joint transmission hypothesis for one or a plurality of stations.

55. A chip, configured to:
obtain a channel state information (CSI) report, the CSI report comprising CSI measurement results in a coherent joint transmission hypothesis for one or a plurality of stations; and
determine a channel state based on the CSI report.

56. A module device, comprising a communication module, a power module, a storage module, and a chip module, wherein
the power module is configured to power the module device;
the storage module is configured to store data and instruction;
the communication module is configured to carry out communication within the module device or communication between the module device and an external device; and
the chip module is configured to:
trigger the communication module to receive network information; and
obtain a channel state information (CSI) report based on the network information, the CSI report comprising CSI measurement results in a coherent joint transmission hypothesis for one or a plurality of stations.

57. A module device, comprising a communication module, a power module, a storage module, and a chip module, wherein
the power module is configured to power the module device;
the storage module is configured to store data and instruction;
the communication module is configured to carry out internal communication within the module device or communication between the module device and an external device; and
the chip module is configured to:
trigger the communication module to obtain a channel state information (CSI) report, the CSI report comprising CSI measurement results in a coherent joint transmission hypothesis for one or a plurality of stations; and
determine a channel state based on the CSI report.

58. A computer-readable storage medium storing computer-readable instructions which, when executed on a communication apparatus, cause the communication apparatus to perform the method of any one of claims 1-50.
